# EUROPEAN PATENT SPECIFICATION

(11) **EP 1 391 295 B1**
(45) Date of publication and mention of the grant of the patent: **17.03.2010**
(21) Application number: 03018918.7
(22) Date of filing: 20.08.2003
(51) Int. Cl.: B32B 27/32, B32B 27/16, B65B 55/08

(54) **Packaging film, package and process for aseptic packaging**
Verpackungsfolie, Verpackung und Verfahren zum aseptischen Verpacken
Feuille d'emballage, emballage et procédé d'emballage asceptique

(30) Priority: 20.08.2002 US 224705; 27.08.2002 US 229441
(43) Date of publication of application: 25.02.2004
(73) Proprietor: CURWOOD, INC., Oshkosh, Wisconsin 54904 (US)
(72) Inventor: Wuest, Sam Edward, Oshkosh Wisconsin 54902 (US); Bellile, Richard Roy, Menasha Wisconsin 54952 (US)
(74) Representative: Gesthuysen, von Rohr & Eggert

(56) References cited:
- EP-A- 0 864 415
- US-A- 3 466 841
- US-A- 4 599 276
- US-B1- 6 294 264

## Description

The present invention relates to multilayer packaging films useful for producing aseptic packages. More particularly, the present invention relates to multilayer films and methods for producing aseptic stick-pack packages.

Machines for packaging food products are known in which packages are formed from a continuous tube of packaging material defined by a longitudinally sealed portion. The choice of packaging material depends on the product to be packaged, but in most applications, the packaging material incorporates more than one material in the structure that is assembled by lamination or coextrusion processes.

US 4 599 276 A refers to a heat-sterilizable laminate film comprising a layer of an ethylene-vinylacetate copolymer and comprising on each side of said layer a layer comprising a propylene-ethylene copolymer. A facultative irradiation of the laminate is mentioned, wherein said irradiation is performed in order to induce a certain cross-linking of the layers to improve the mechanical properties of the respective laminates. An exposure of the surfaces of the heat-sterilizable laminate to a hydrogen peroxide sterilization solution for disinfection purposes is not described.

US 6 294 264 B1 refers to an oriented film suitable for cooking comprising an outer layer of an atactic or syndiotactic propylene copolymer and a second layer comprising a propylene/alpha-olefin copolymer. The oriented film may further comprise a layer having a low permeance to oxygen. This document describes a treatment of the film via irradiation, thereby inducing cross-linking between molecules of the polymers contained therein. A sterilization step in form of an exposure of the film to a sterilization solution is not described.

Aseptic packaging applications require that the packaging film provide several basic requirements for success in the marketplace. First, the packaging film must be suitable for use in contact with the intended product such as a foodstuff or medicinal product as required e.g. by the U.S. Food and Drug Administration, and must comply with applicable material migration requirements such as for hexane extractables. Second, the packaging film must provide physical integrity to assure containment of the product and maintenance of the sterility, as well as the ability to be processed in packaging machines. The term physical integrity applies to the structural integrity of the packaging film itself, as well as that of any closures and seals, formed therein or applied thereto, to assure package soundness and hermeticity during package formation, handling and distribution. Third, the packaging film must be able to be sterilized and be compatible with the method of sterilization used (i.e. heat, chemical, or radiation). And lastly, the packaging film must provide adequate barrier protection to maintain product quality until it is used. Barrier protection means control over the transmission of oxygen, moisture, light, and aroma through the package as required by the intended product.

In typical processes for producing aseptic packages the packaging film is unwound off a reel and fed through a sterilizing unit in which it is sterilized, for example, by immersion in a bath of liquid sterilizing agent, such as a concentrated solution of hydrogen peroxide and water, to destroy putrefactive microorganisms.

More specifically, the sterilizing unit may comprise an aseptic bath filled, in use, with the sterilizing agent in which the film is fed continuously. The aseptic bath may conveniently comprise a reservoir of hydrogen peroxide solution wherein two parallel vertical branches connected at the bottom to define a U-shaped path of film having a length depending on the traveling speed of the film and such as to allow enough time to treat the packaging film. For effective and fairly fast treatment and to reduce the size of the sterilizing chamber, the sterilizing agent is usually maintained at a high temperature of, say, approximately 70 °C.

The sterilizing unit may comprise an aseptic chamber in which the packaging film issuing from the sterilizing bath is subjected to mechanical processing (e.g. by drying rollers) and thermal/fluidic processing (e.g. by hot-air jets) to remove any residual sterilizing agent. The amount of residual sterilizing agent allowed in the packaged product, in fact, is governed by strict standards (the maximum permissible amount being in the order of a few parts per million). Generally, before leaving the aseptic chamber, the film is folded into a cylinder and sealed longitudinally to form, in known manner, a continuous, vertical, longitudinally sealed tube. More specifically, the packaging film is fed vertically through a number of successive forming assemblies, which interact with the film to gradually form the film from a generally flat sheet, through an open C-shape to a substantially circular shape. The tube of packaging film is filled with the product and then fed to a forming and (transverse) sealing unit for forming individual packages and by which the tube is gripped between pairs of jaws to seal the tube transversely and form aseptic packages. Cutting the sealed portions between the packages then separates the pillow-shaped packs.

Current technology used to produce aseptic portion control packages, or "stick-packs", require that any edge of the packaging film that will be exposed within the aseptic chamber be slit or scored prior to entry into the aseptic bath. The slitting or scoring prior to the aseptic bath is necessary to destroy any putrefactive microorganisms that may have become entrained in the packaging film laminate during film processing. In other words, the packaging film laminate is produced in a non-aseptic environment and putrefactive organisms may be entrapped between the layers of the packaging film during lamination or other processing. If the packaging film is slit or scored after the aseptic bath (in the aseptic chamber), then spores or other putrefactive organisms laminated in between the film's layers could be released into the aseptic chamber. Thus, the sterile environment of the packaging machine may be compromised.

Slitting or scoring the packaging film prior to the aseptic bath adds a great deal of complexity to the process of making aseptic packages and limits the processes efficiency. Slitting the film before the aseptic bath adds to the complexity of the packaging process because multiple film strips must then be handled. Scoring, which is generally accomplished by laser, requires costly equipment and creates tracking problems in the process. Scoring also requires that the sealant portion of the packaging film be thick enough such that a laser score may be generated into, but not through the sealant portion.

Packaging machines of the above type are used in a wide range of food industries; and performance of the packaging film, in particular, is such as to amply conform to standards governing asepticity of the packages and residual sterilizing agent.

The problem to be solved by the present invention is thus to provide a novel multilayer film laminate adapted for aseptic packaging, which - at least partially - overcomes and/or avoids the disadvantages related to the respective prior art films of this kind.

As a solution for said problem delineated before, the present invention provides a process for aseptically packaging a product with the inventive multilayer film laminate according to claim 1. Further, advantageous and/or preferred embodiments are comprised by the corresponding dependent claims.

Another subject-matter comprised by the present invention is a product as defined in claim 29, said product comprising an aseptical package obtainable according to the inventive process.

A further subject-matter comprised by the present invention is a multilayer film laminate according to claim 30. Further, advantageous and/or preferred embodiments are comprised by the corresponding dependent claim.

Finally, another subject-matter comprised by the present invention is an aseptic package according to claim 32. Further, advantageous and/or preferred embodiments are comprised by the corresponding dependent claims.

Thus, according to the present invention, there is provided a novel process for aseptically packaging a product comprising the steps of: (A) providing an irradiated multilayer film laminate adapted for aseptic packaging applications, said film laminate comprising (i) an inner polymeric surface sealant layer comprising an olefin polymer having a Vicat Softening Point greater than 90 °C; (ii) an intermediate oxygen barrier layer; and (iii) an outer polymeric surface layer comprising a polymeric layer selected from olefin polymers and polyester homopolymers or copolymers having a hydrogen peroxide resistant exterior coating, said outer layer having a Vicat Softening Point greater than 90 °C, wherein said multilayer film laminate is irradiated at a dosage in an amount sufficient to kill microorganisms entrapped between layers of said multilayer film laminate; (B) exposing both surfaces of said packaging film laminate to a hydrogen peroxide sterilization solution; (C) removing substantially all hydrogen peroxide sterilization solution from the surfaces of said packaging film laminate; (D) forming a substantially vertical, longitudinally sealed tube; (E) filling said tube with a material to be packaged; (F) sealing transversely across said tube to enclose the material to be packaged in individual packages; and (G) cutting the packaging film laminate through sealed areas between individual packages.

Furthermore, according to the present invention, there is also provided a novel food packaging film on the basis of a multilayer film laminate adapted for aseptic packaging applications, especially for food items and medicinal products that require aseptic conditions for proper shelf life, said film laminate comprising: (a) an inner polymeric surface sealant layer comprising an olefin polymer having a Vicat Softening Point greater than 90 °C; (b) an intermediate oxygen barrier layer; and (c) an outer polymeric surface layer selected from olefin polymers having a Vicat Softening Point greater than 90 °C and polyester homopolymers or copolymers having a hydrogen peroxide resistant exterior coating; wherein said multilayer film laminate is irradiated at a dosage in an amount sufficient to kill microorganisms entrapped between layers of said multilayer film laminate and is treated by a sterilization treatment via exposing both surfaces of said multilayer film laminate to a hydrogen peroxide sterilization solution with subsequent removal of said hydrogen peroxide sterilization solution.

In another embodiment, a novel aseptic package may be made from the foregoing packaging film (i.e. the multilayer film laminate of the present invention) on a vertical, multilane packaging machine.

Thus, the present invention relates to the method for producing an inventive aseptic packaging film laminate by irradiating a film laminate, as defined before, at a dosage in an amount sufficient to kill spores and/or microorganisms, especially spores and/or microorganisms internally entrapped (e.g. between the different layers of said film laminate) so that an aseptic, i.e. an internally-sterile packaging film laminate results.

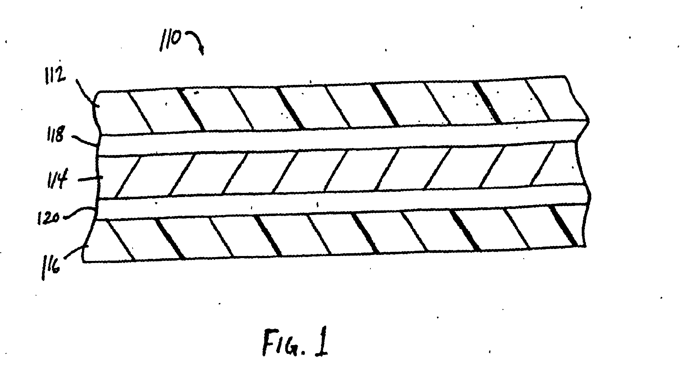

Figure 1 is a schematic cross-section of a preferred embodiment of a multilayer film according to the invention.

The packaging film, package and process of the present invention may be used for packaging various substances, particularly pumpable, low-acid foods, such as pudding and dairy products, as well as medicinal products such as enteral solutions, that require aseptic conditions for proper shelf life. The invention has particular utility for aseptic stick-pack packaging applications, wherein the packaging film is exposed to a hot hydrogen peroxide solution bath and thereafter formed into a substantially vertical, longitudinally sealed tube on a multilane, vertical packaging machine.

In discussing polymer layers, plastic films and packaging, various acronyms are used herein and they are listed below. In referring to film structure, a slash "/" will be used to indicate that components to the left and right of the slash are in different layers and the relative position of components in layers may be so indicated by use of the slash to indicate film layer boundaries. A hyphen "-" will be used to denote that the polymers or monomers so separated are copolymerized. Acronyms commonly employed herein include:
PE - Polyethylene (ethylene homopolymer and/or copolymer of a major portion of ethylene with one or more α-olefins)
PVDC - Polyvinylidene chloride (also includes copolymers of vinylidene chloride, especially with vinyl chloride)
EVOH - A saponified or hydrolyzed copolymer of ethylene and vinyl acetate
C₂ - ethylene monomer
C₄ - butene-1 monomer
C₆ - hexene-1 monomer
C₈ - octene-1 monomer
C₁₀ - decene-1 monomer

Unless specifically noted the polymers defined herein are "unmodified" by any intentional grafting or copolymerization with modifying moieties such as dienes, rubber moieties or acrylic acids. However, the polymers may contain chemicals or additives in small amounts (typically under 1 % by weight based on the weight of the polymer) which are present as by-products of the polymer manufacturing process or otherwise added by polymer manufacturers including e.g. catalyst residues, antioxidants, stabilizers, antiblock materials, slip agents and the like. The polymers may also contain other components, for example colorants, typically in amounts less than 15 % by weight. Polymeric blends and other modifications known in the art may also be made.

The terms "laminate", "laminate film" or "laminated" as used herein means at least two film surfaces are physically joined or bonded to each other by an adhesive lamination process or extrusion lamination process.

The term "barrier" or "barrier layer" as used herein means a layer of the multilayer film which acts as a physical barrier to oxygen and/or moisture. The term "oxygen barrier" as used herein means a layer of a multilayer film which acts as a physical barrier to oxygen. The barrier layer may be present as part of a multilayer coextruded film, or may comprise a separate layer that forms part of a laminated structure.

The term "Rad" as used herein means the radiation unit defined to be the amount of radiation which will dissipate 100 ergs of energy per gram of irradiated material by ionizing particles. The Megarad (Mrad) is equal to one million Rad.

Referring to the drawings, Fig. 1 shows a cross-sectional view of a packaging film of the present invention generally indicated at 110. The packaging film comprises an inner sealant layer 116, an outer layer 112 and an oxygen barrier layer 114 disposed between the inner sealant layer 116 and the outer layer 112. The packaging film 110 may include additional interior layers, such a first tie layer 118 and second tie layer 120 that provide for the bonding of layers, or other layers (not shown) that provide other desired functionality to the packaging film such as stiffness. In preferred embodiments, the packaging film has a total thickness of 102 µm (4.0 mils) or less; preferably less than 94 µm (3.7 mils); more preferably less than 84 µm (3.3 mils).

The inner sealant layer 116 acts as the innermost layer, or interior surface layer, of a resultant package and comes in contact with the foodstuff or medicinal material packaged by the packaging film. Thus, in addition to having suitable heat-sealing properties, the inner sealant layer 116 is preferably suitable for food and/or drug contact and should possess low hexane extractable values, such as determined by the U.S. Food and Drug Administration. Furthermore, the inner sealant layer 116 must be resistant to deformation or delamination due to contact with a hot hydrogen peroxide sterilization solution and must not appreciably absorb hydrogen peroxide. The inner sealant layer should also shed the hydrogen peroxide sterilization solution quickly and easily since the amount of residual sterilization solution permitted in a final packaged product is governed by strict standards (the maximum permissible amount being in the order of a few parts per million). The inner sealant layer 116 should also provide good machinability and facilitates passage of the film over equipment.

The inner sealant layer 116 comprises an olefin polymer having a Vicat Softening Point (ASTM D-1525) greater than 90 °C; preferably greater than 100 °C; more preferably greater than 105 °C; and preferably has a Melting Point greater than 120 °C. Advantageously, it has been found that olefin polymers having a Vicat Softening Point lower than 90 °C become too tacky (insufficient "hot slip") during processing/packaging to run properly on vertical, multilane machines. Preferably, the olefin polymer is selected from the group of ethylene-α-olefin copolymers, particularly including substantially linear ethylene-α-olefin copolymers such as linear low density polyethylene (LLDPE), low density polyethylene (LDPE), high density polyethylene (HDPE), polypropylene-ethylene copolymers and mixtures thereof. As used herein, the term "ethylene-α-olefin" generally designates copolymers of ethylene with one or more comonomers selected from C₃ to C₁₀ α-olefins, such as butene-1, pentene-1, hexene-1, octene-1, methylpentene-1 and the like. Additionally, polypropylene-ethylene copolymers suitable for the inner sealant layer 116 include less than 30 % by weight ethylene content, preferably less than 20 % and more preferably less than 10 % ethylene content. Preferably, the olefin polymer selected for the inner sealant layer 116 has a density greater than 0.910 g/cm³; more preferably greater than 0.915 g/cm³. Suitable polymers for the inner sealant layer 116 include ATTANE 4201 (Ethylene-octene-1 copolymer having a reported Vicat Softening Point of 93 °C, Melting Point of 123 °C and a density of 0.912 g/cm³) DOWLEX 2045 (LLDPE having a reported Vicat Softening Point of 108 °C, Melting Point of 122 °C and a density of 0.920 g/cm³), both available from The Dow Chemical Company, Midland, Michigan, USA.

The oxygen barrier layer 114 is formed of any suitable oxygen barrier material or blend of materials which will control the oxygen permeability of the packaging film. For perishable food packaging, the oxygen O₂ permeability (or "O₂ gas transmission rate") desirably should be minimized. Preferably, the packaging film will have an O₂ permeability of less than about 20 cm³ O₂/m² for a 24 hour period at 1 atmosphere, 0 % relative humidity and 23 °C, and preferably less than 15 cm³ O₂/m²/24 h, more preferably less than 10 cm³ O₂/m²/24 h. The O₂ permeability can be measured by ASTM D-3985-81, which is incorporated herein in its entirety by reference thereto. The oxygen barrier layer 114 is preferably selected from ethylene-vinyl alcohol copolymer (EVOH), metallized films, copolymers of vinylidene chloride (PVDC) such as PVDC-vinyl chloride (PVDC-VC) or PVDC-methylacrylate, metal foil and oxide coated films such as aluminum or silicon oxide coated films. As used herein, "metallized film" generally designates polymeric films having a thin layer of metal, preferably aluminum, deposited on the surface thereof by known techniques, such as vapor deposition. Preferred metallized films include metallized biaxially oriented polyethylene terephthalate (mOPET) and metallized biaxially oriented nylon (mBON). For certain embodiments of the present invention, a preferred barrier layer comprises mOPET. For yet another certain embodiment of the invention, a preferred barrier layer comprises mBON. For certain other embodiments of the invention, the oxygen barrier layer 114 preferably comprises Al₂O₃ coated oriented polyethylene terephthalate (OPET) or aluminum foil.

The outer layer 112 may include any polymeric layer that provides peroxide resistance to the packaging film and may also preferably provide dimensional stability, machineability and abuse and heat resistance. The outer layer 112 is also preferably suitable for register printing. The outer layer 112 is selected from olefin polymers and coated polyester homopolymers or copolymers. The coated polyesters have an exterior surface coating selected from silicone or other hydrogen peroxide resistant coatings. The silicone coating is preferably cross-linked. The outer layer has a Vicat Softening Point greater than 90 °C; preferably greater than 100 °C; more preferably greater than 105 °C. The outer layer 112 is preferably selected to have a Vicat Softening Point greater than or equal to the Vicat Softening Point of the inner sealant layer 116. The olefin polymers are selected from the group of ethylene-α-olefin copolymers, low density polyethylene (LDPE), high density polyethylene (HDPE), polypropylene-ethylene copolymers, polypropylene homopolymers and copolymers and mixtures thereof. The ethylene-α-olefin copolymers, low density polyethylene (LDPE), high density polyethylene (HDPE), polypropylene-ethylene copolymers are the same as those described for the inner sealant layer 116. The polypropylene homopolymers and copolymers may preferably be selected from biaxially oriented polypropylene homopolymer or copolymer film (BOPP) and a cast polypropylene homopolymer or copolymer film. For a certain preferred embodiment of the invention, the outer layer comprises BOPP. No polyester layer is exposed to the hydrogen peroxide sterilization solution due to the exterior coating. Uncoated polyester layers as surface layers have been found to absorb hydrogen peroxide, causing the edges to swell and unsuitable tracking on packaging machines. Thus, the outer surface of any polyester layer is protected by an exterior coating, while the opposite surface is protected by being adhered to an interior layer of the packaging film.

The outer layer 112 is preferably printed with an ink or graphics layer prior to being laminated with the oxygen barrier layer 114 and inner sealant layer 116. The printing is positioned such that it is located on the interior surface of the outer layer 112 of the resultant laminate, either adhered to the oxygen barrier layer 114 or another interior layer.

The packaging film 110 may include one or more intermediate layers between the oxygen barrier layer 114 and inner sealant layer 116 and/or between the outer layer 112, such as the first and second tie layers 118 and 120 shown in Fig. 1. Tie layers 118 and 120 may respectfully assure adhesion between the oxygen barrier layer 114 and the outer layer 112 and inner sealant layers 116 respectively. These tie layers may be identical or different from each other, and may include a wide variety of polymeric materials known to those in the art. Suitable tie layer materials are known to those skilled in the art and will generally vary depending on the layers to be joined. For example, if an EVOH layer or a metallized film is selected as the barrier layer, some form of tie layer, adhesive layer, or extrusion laminate layer will be required to bond to the inner sealant layer and or the outer layer. In a preferred embodiment of the invention, the inner sealant layer 116 comprises a first surface layer of a multilayer coextruded film having the structure: LDPE/tie/EVOH/tie/LLDPE, wherein the LLDPE comprises the inner surface sealant layer 116 of the multilayer packaging film 110 and makes contact with the packaged product.

The multilayer packaging film 110 is irradiated at a dosage in an amount sufficient to kill putrefactive microorganisms, such as spores, that have been trapped between layers of the multilayer packaging film 110 during manufacture. Suitable dosage amounts for this purpose are between 1 to 20 Mrad, and more preferably between 2 to 12 Mrad. Preferably, the dosage is in amount of at least 2 Mrad; more preferably at least 4 Mrad; and most preferably at least 5 Mrad. Advantageously, the dosage is in an amount sufficient to provide at least 3 log kill for *B. Pumilus* dried spores, preferably an amount sufficient to provide at least 5 log kill, and more preferably an amount sufficient to provide at least 6 log kill.

Irradiation may be accomplished by various radiation mediums, for example by high energy electron beams, X-rays, gamma rays by employing iron 59 or cobalt 60, B-rays, e.g. by using cobalt 60, carbon 14, phosphorus 32, strontium 90, and ultraviolet light above 2000 and below 2700 Angstroms. Preferably electrons from an electron beam generator such as an iron core transformer accelerator or other accelerators such as a Van der Graff or resonating transformer may be used as the radiation medium, however the radiation is not limited to electrons from an accelerator and any ionizing radiation may be used. Gamma rays are capable of penetrating thick objects, but may have slow processing speeds. Electron beams do not penetrate as deeply as gamma rays, but may have greater processing speeds, are capable of being precisely controlled with respect to the depth of penetration, and the irradiation may be carried out at ambient temperatures. Electron beam radiation penetrates as a function of voltage and beam current determines the processing speed. Advantageously, electron accelerators may be employed which are efficient, economical and have high production speeds for processing films and sheets of limited thicknesses, i.e. less than 254 µm (10 mils) and preferably 102 µm (4.0 mils) or less. The irradiation source may be any electron beam generator capable of supplying the desired dosage and units operating in a range of 150 kilovolts to about 6 megavolts. Industrial electron beam units are available up to several hundred kilowatts of power and up to 5 million volts. Smaller low-voltage units are also available operating at 200 to 500 kilovolts. Suitable electron beam irradiation equipment is commercially available from Energy Sciences Inc. of Wilmington, Massachusetts, USA. A detailed description of the electron beam irradiation process is described in U.S. Patent No. 4,652,763. Preferably, the packaging film is irradiated in a single pass, but additional passes may be made.

In preferred embodiments, at least one of the polymeric layers of the packaging film is oriented, preferably biaxially oriented. Advantageously at least one layer may provide the biaxial orientation, preferably the outer layer 112 or the oxygen barrier layer 114, for example a biaxially oriented metallized film. Oriented film components may be used to add desirable stiffness, heat resistance, dimensional stability and/or tear properties in combination with the other layers of the overall film structure. Additionally, the films of the present invention will advantageously have less than 5 % shrink (preferably less than 2 %) in either or both directions at 90 °C (preferably at 135 °C). Shrinkage values are obtained by measuring unrestrained shrink of a 10 cm square sample immersed in water (or other non-reactive liquid) at 90 °C (or the indicated temperature if different) for ten seconds. Test specimens are cut from a given sample of the film to be tested. The specimens are cut into squares of 10 cm length M.D. (machine direction) by 10 cm length T.D. (transverse direction). Each specimen is completely immersed for 10 seconds in a 90 °C (or the indicated temperature if different) water bath. The specimen is then removed from the bath and the distance between the ends of the shrunken specimen is measured for both the M.D. and T.D. directions. The difference in the measured distance for the shrunken specimen and the original 10 cm side is multiplied by ten to obtain the percent of shrinkage for the specimen in each direction. Generally, the shrinkage of 4 specimens is averaged and the average M.D. and T.D. shrinkage values reported.

Since the inventive aseptic packages, particularly aseptic stick-packs, are particularly adapted to packaging of products, such as pudding, directed to children, the packaging film may advantageously include tear properties that allow small children to open the packages easily. Advantageously, the packaging film may have an Elmendorf Tear Value (ASTM D-1922-94a) of between 10 to 300 grams force. Preferred Elmendorf tear values of less than 200 grams, beneficially less than 100 grams, may be obtained in preferred embodiments of the present invention. Further, in a preferred embodiment, the packaging film has sufficient stiffness to maintain an upright tubular condition when formed into a tubular package after filling with a product and sealing, and most preferably after opening while being hand-held for consumption of the product contained therein.

Films of the present invention may be formed into packages of various sizes. The films are particularly adapted for producing aseptic "stick-packs" on multilane, vertical packaging machines such as SVL-AS 20/30 sold by Hassia USA, Inc., Morganville, New Jersey, USA.

Multilane, vertical packaging machines manipulate a packaging film by substantially folding the film into a cylinder and sealing longitudinally to form, in known manner, a vertical, longitudinally sealed tube. More specifically, the strip of packaging film is fed vertically through a number of successive forming assemblies, which interact with the strip to gradually form the strip from a generally flat sheet, through an open C-shape to a substantially circular shape. The tube of packaging film is filled with the product and then fed to a forming and (transverse) sealing unit for forming individual packages and by which the tube is gripped between pairs of jaws to seal the tube transversely and form aseptic stick-packs. The "stick-packs" generally have a length substantially greater than the width thereof. Cutting the sealed portions between the packs then separates the pillow-shaped packs.

A preferred packaging film according to the invention comprises a laminate of an inner sealant layer of LLDPE film, an outer layer of BOPP film and an oxygen barrier layer comprising a mOPET film. The LLDPE layer comprises a surface layer of a five-layer coextruded film having the following structure: LDPE/tie/EVOH/tie/LLDPE. The five-layer coextruded film has a thickness of approximately 51 µm (2.0 mils). The outer layer BOPP film is approximately 18 µm (70 gauge) and is printed with ink on one surface thereof. The mOPET oxygen barrier film is approximately 12 µm (48 gauge). The five-layer coextruded film is laminated to the mOPET film with a first intermediate adhesive layer such that the LDPE surface of the five-layer film is adhered to the non-metallized surface of the mOPET film. The printed surface of the 18 µm (70 gauge) outer layer BOPP film is laminated to the metallized surface of the 12 µm (48 gauge) mOPET film by a second intermediate adhesive layer. Thus, the final structure of the particularly preferred packaging film comprises: (outside) 18 µm (70 ga.) BOPP/ink/adhesive/12 µm (48 ga.) mOPET/adhesive/(LDPE/tie/ EVOH/tie/LLDPE) (inside) and a total thickness of about 89 to 91 µm (3.5 to 3.6 mils). The packaging film is thereafter irradiated using an electron beam at a dosage at an amount sufficient to kill spores entrapped between the layers of the packaging film. The dosage is preferably at least 1 Mrad, preferably at least 2 Mrad, more preferably at least 3 Mrad, and most preferably at least 5 Mrad.

Preferred embodiments of the multilayer films of the present invention provide an excellent combination of beneficial properties including dimensional stability, register printability, hot tack properties, oxygen barrier properties and peroxide resistance. Further, the irradiation provides for an internally-sterile packaging film. In other words, microorganisms that were trapped between layers of the packaging film during manufacture are destroyed. The internally-sterile films of the present invention advantageously eliminate the need for slitting or scoring prior to being immersed in an aseptic bath during the aseptic packaging process. Additionally, the internally-sterile packaging films may advantageously comprise thinner materials since no scoring is necessary. Thus, the films of the present invention are particularly suited for use in small-sized aseptic packaging applications. Beneficial uses include packages having less than 454 grams of product contained therein. Advantageously, packages having 100 grams or less may be made.

The films of the present invention are particularly suited for aseptic packaging of pumpable products, such as pudding, dairy products and other low-acid foodstuffs, or medical products such as enteral solutions. The present invention includes a novel process for aseptically packaging a product comprising the steps of: (A) providing a packaging film comprising (1) an inner sealant layer comprising an olefin polymer having a Vicat Softening Point greater than 90 °C; (2) an oxygen barrier layer having an oxygen transmission rate less than 15.5 cm³ O₂/m²/day; and (3) an outer layer having a Vicat Softening Point greater 90 °C and selected from (i) olefin polymers and (ii) polyester homopolymers or copolymers having an exterior coating selected from silicone or other hydrogen peroxide resistant coatings; wherein said packaging film is irradiated at a dosage in an amount sufficient to kill internally entrapped microorganisms; (B) exposing both surfaces of said packaging film to hydrogen peroxide; (C) removing substantially all hydrogen peroxide from the surfaces of said packaging film; (D) forming a substantially vertical, longitudinally sealed tube; (E) filling said tube with a material to be packaged; (F) sealing transversely across said tube to enclose the material to be packaged in individual packages; and (G) cutting the packaging film through sealed areas between individual packages. The process is adapted for use on commercial vertical, multilane packaging machines.

The invention may be further understood by reference to the following examples.

Suitable LDPE's for use with the present invention include materials having a density of 0.920 g/cm³ and 1 dg/min Melt Index. Melt Index is measured by ASTM D-1238, condition E (190 °C) (except for propene based (greater than 50 % C₃ content) polymers are tested at condition TL (230 °C)). Suitable BOPP films include AET 70T523-3 available from Applied Extrusion Technology. Suitable tie layers include rubber-modified and anhydride-modified ethylene-α-olefin copolymers such as TYMOR 1203 from Rohm and Haas. Suitable EVOH polymers include SOARNOL ET 3803 (38 mol % ethylene and 3 dg/min). Suitable LLDPE materials include DOWLEX 2045 available from Dow Chemical Company. Melting Point is measured by ASTM D-3418, peak m.p. determined by DSC with a 10 °C/min heating rate. Average Gauge is measured by ASTM D-2103. All ASTM test methods noted herein are incorporated by reference into this disclosure.

### EXAMPLE 1

Multilayer films are produced and tested to determine their resistance to exposure to a heated hydrogen peroxide bath. The film constructions are detailed below.

### Film #1

A multilayer film was prepared in accordance with the present invention by adhesively laminating an outer layer of 18 µm (70 ga.) biaxially oriented polypropylene film (BOPP) having printed graphics on a surface thereof to a 12 µm (48 gauge) metallized, oriented polyethylene terephthalate film (mOPET) oxygen barrier layer such that the printed graphics layer was adhered to the metallized surface of the mOPET film using a urethane-based aromatic laminating adhesive. A multilayer coextruded film having the structure LDPE/tie/EVOH/tie/LLDPE was adhesively laminated to the mOPET layer on a side opposite the printed BOPP layer, such that the LLDPE layer formed the innermost layer of the total film construction. The resultant multilayer film has the following structure (outside) 18 µm (70 ga.) BOPP/ink/adhesive/12 µm (48 ga.) mOPET/adhesive/(LDPE/tie/EVOH/tie/LLDPE) (inside) and a total thickness of about 89 µm (3.5 mil). The multilayer film is irradiated by a source of electron beam radiation with the printed side of the film facing the source of radiation to provide samples at three dosage levels. The dosage levels are 1 Mrad, 2 Mrad and 3 Mrad.

### Film #2

Film #2 is a comparative example (not of the invention). The structure of film #2 is the same as that described for Film #1 except that a 9 µm (36 ga.) uncoated, oriented polyethylene terephthalate (OPET) film replaces the 18 µm (70 ga.) BOPP outer layer. This film includes the following structure: 9 µm (36 ga.) OPET/ink/adhesive/12 µm (48 ga.) mOPET/adhesive/51 µm (2.0 mil) (LDPE/tie/EVOH/tie/LLDPE) (inside). The total thickness is approximately 79 µm (3.1 mil). The multilayer film is irradiated by a source of electron beam radiation with the printed side of the film facing the source of radiation to provide samples at three dosage levels. The dosage levels are 1 Mrad, 2 Mrad and 3 Mrad.

### Film #3

Film #3 (of the invention) is the same as film #1 except that the 12 µm (48 ga.) mOPET layer is replaced with a 12 µm (48 ga.) aluminum oxide (Al₂O₃) coated OPET. The complete structure of film #3 is: 18 µm (70 ga.) BOPP/ Ink/ adhesive/ 12 µm (48 ga.) Al₂O₃ coated OPET/adhesive/51 µm (2.0 mil) (LDPE/tie/EVOH/tie/LLDPE) (inside). The total thickness is approximately 89 µm (3.5 mil). The multilayer film is irradiated by a source of electron beam radiation with the printed side of the film facing the source of radiation to provide samples at three dosage levels. The dosage levels are 1 Mrad, 2 Mrad and 3 Mrad.

### Film #4

Film #4 (of the invention) is the same as described for film # 1 except that the 12 µm (48 ga.) mOPET is replaced with a 12 µm (48 ga.) metallized biaxially oriented nylon (mBON) film and the 51 µm (2.0 mil) (LDPE/tie/EVOH/tie/LLDPE) film is replaced with a 38 µm (1.5 mil) cast polypropylene film. The total thickness is approximately 76 µm (3.0 mil). The multilayer film is irradiated by a source of electron beam radiation with the printed side of the film facing the source of radiation to provide samples at three dosage levels. The dosage levels are 1 Mrad, 2 Mrad and 3 Mrad.

### Film #5

Film #5 (of the invention) is identical to film #1 except that the 12 µm (48 ga.) mOPET layer is replaced with a 9 µm (35 ga.) aluminum foil layer. The total thickness is approximately 86 µm (3.4 mil). The multilayer film is irradiated by a source of electron beam radiation with the printed side of the film facing the source of radiation to provide samples at three dosage levels. The dosage levels are 1 Mrad, 2 Mrad and 3 Mrad.

Each of films #1-5 is tested for hydrogen peroxide resistance. Film samples measuring approximately 11.4 cm (4.5 inches) by 36.8 cm (14.5 inches) are cut from each film and for each dosage level. The film samples are placed in separate 500 ml containers filled with 35 % hydrogen peroxide solution available from Fisher Scientific. Lids are securely fastened and the containers are placed in a 9.09 liters (2 gallon) container. The 9.09 liters (2 gallon) container with the 500 ml sample containers is placed into a constant temperature oven set at 71.1 °C (160 °F) for one hour. The container is then removed from the oven and allowed to cool to room temperature. The film samples are removed from the sample containers, rinsed with water and wiped dry. The samples are then visually inspected for signs of delamination and/or blistering along the edges, or in the ink areas. Any visible sign of delamination and/or blistering is considered to fail the test. If no failure has occurred, the sample is returned to the sample container and oven for additional time. This process is continued until failure is observed.

Unacceptable films for aseptic packaging will exhibit severe delamination at less than 8 hours of exposure to a heated hydrogen peroxide sterilization solution. It is expected that Film #2 will experience severe delamination at less than 8 hours exposure to a heated hydrogen peroxide sterilization solution. Thus, Film #2 is not adapted for aseptic packaging. It is expected that the irradiation of Films #1-5 will destroy microorganisms, such as spores, entrapped between layers of the multilayer film laminates at each dosage level.

Advantageously, the films of the present invention will not contain exposed polyester or polyamide outer surfaces (not including cross-sectional edges of the film), while uncoated polyesters and polyamide layers may be used as internal layers of the packaging film.

### EXAMPLE 2

Inventive Film #1 was further tested for Elmendorf Tear Values according to ASTM D-1922-94a, which is incorporated herein in its entirety by reference. The tear values of four samples are measured in both the transverse direction (TD) and machine direction (MD) of the film for each dosage level.

It is expected that the inventive film #1 will have tear values sufficient to produce an integral package which is easy to open by tearing.

### EXAMPLE 3

A multilayer film laminate was prepared in accordance with the present invention by adhesively laminating an outer layer of 18 µm (70 ga.) biaxially oriented polypropylene film (BOPP) having printed graphics on a surface thereof to a 12 µm (48 ga.) metallized, oriented polyethylene terephthalate film (mOPET) oxygen barrier layer such that the printed graphics layer was adhered to the metallized surface of the mOPET film using a urethane-based aromatic laminating adhesive. A multilayer coextruded film having the structure LDPE/tie/EVOH/tie/LLDPE was adhesively laminated to the mOPET layer on a side opposite the printed BOPP layer, such that the LLDPE layer formed the innermost layer of the total film construction. The resultant multilayer film had the following structure (outside) 18 µm (70 ga.) BOPP/ink/adhesive/12 µm (48 ga.) mOPET/ adhesive/(LDPE/tie/EVOH/tie/LLDPE) (inside) and a total thickness of about 89 µm (3.5 ga.). The multilayer film was irradiated by a source of electron beam radiation with the printed side of the film facing the source of radiation to provide samples at three dosage levels. The dosage levels were 1 Mrad, 2 Mrad and 3 Mrad. It is expected that the irradiation of the multilayer packaging film will advantageously destroy microorganisms, such as spores, entrapped between layers of the multilayer film laminate and that the multilayer packaging film will have suitable machining properties for use on vertical, multilane packaging machines. Furthermore, it is expected that the irradiated multilayer film laminate will advantageously have an Elmendorf Tear Value between 10 to 300 grams force and less than 5 % shrink Thus, Example 3 illustrates that the films of the present invention are advantageously internally sterile and therefore eliminate the need for slitting or scoring prior to immersion in an aseptic bath.

## Claims

1. A process for aseptically packaging a product comprising:
(A) providing an irradiated multilayer film laminate adapted for aseptic packaging applications, said film laminate comprising:
(i) an inner polymeric surface sealant layer comprising an olefin polymer having a Vicat Softening Point greater than 90 °C;
(ii) an intermediate oxygen barrier layer; and
(iii) an outer polymeric surface layer comprising a polymeric layer selected from olefin polymers and polyester homopolymers or copolymers having a hydrogen peroxide resistant exterior coating, said outer layer having a Vicat Softening Point greater than 90 °C;
wherein said multilayer film laminate is irradiated at a dosage in an amount sufficient to kill microorganisms entrapped between layers of said multilayer film laminate;
(B) exposing both surfaces of said packaging film laminate to a hydrogen peroxide sterilization solution;
(C) removing substantially all hydrogen peroxide sterilization solution from the surfaces of said packaging film laminate;
(D) forming a substantially vertical, longitudinally sealed tube;
(E) filling said tube with a material to be packaged;
(F) sealing transversely across said tube to enclose the material to be packaged in individual packages; and
(G) cutting the packaging film laminate through sealed areas between individual packages.

2. The process according to claim 1, wherein the irradiation of said multilayer film laminate is performed before step (B).

3. The process according to claim 1 or 2, wherein said multilayer film laminate is irradiated at a dosage between 1 and 20 Megarads.

4. The process according to any of the preceding claims, wherein said multilayer film laminate is irradiated at a dosage in an amount of at least 2 Megarads, especially at a dosage in an amount of at least 4 Megarads, preferably at a dosage in an amount of at least 5 Megarads.

5. The process according to any of the preceding claims, wherein said irradiation is accomplished by a radiation medium selected from the group consisting of high energy electron beams; X-rays; gamma rays, e.g. by employing iron 59 and/or cobalt 60; B-rays, e.g. by using cobalt 60, carbon 14, phosphorus 32, and/or strontium 90; and ultraviolet light, especially ultraviolet light above 2,000 and below 2,700 Angstroms.

6. The process according to any of the preceding claims, wherein said multilayer film laminate has a total thickness of less than 254 µm (10 mil), especially a total thickness of less than 102 µm (4.0 mil).

7. The process according to any of the preceding claims, wherein said inner sealant layer is selected from the group of ethylene-α-olefin copolymers, low density polyethylene, high density polyethylene, polypropylene-ethylene copolymers and mixtures thereof.

8. The process according to any of the preceding claims, wherein said inner sealant layer comprises an ethylene-α-olefin copolymer.

9. The process according to any of the preceding claims, wherein said ethylene-α-olefin copolymer comprises a copolymer of ethylene and at least one C₃ to C₁₀ α-olefin.

10. The process according to any of the preceding claims, wherein said at least one C₃ to C₁₀ α-olefin is selected from hexene-1 and octene-1.

11. The process according to any of the preceding claims, wherein said inner sealant layer has a melting point greater than 120 °C.

12. The process according to any of the preceding claims, wherein said inner sealant layer has a density greater than 0.910 g/cm³, especially a density greater than 0.915 g/cm³.

13. The process according to any of the preceding claims, wherein said olefin polymer comprises a propylene-ethylene copolymer having an ethylene content of less than 10 % by weight.

14. The process according to any of the preceding claims, wherein said oxygen barrier layer is selected from the group of ethylene-vinyl alcohol copolymer, metallized films, copolymers of vinylidene chloride, metal foil and oxide coated films.

15. The process according to any of the preceding claims, wherein said oxygen barrier layer comprises a metallized film selected from metallized biaxially oriented polyester terephthalate and metallized biaxially oriented nylon.

16. The process according to any of the preceding claims, wherein said oxygen barrier layer comprises a metal oxide coated film wherein the metal oxide is selected from aluminum oxide and silicon oxide.

17. The process according to any of the preceding claims, wherein said oxygen barrier layer comprises a metal foil.

18. The process according to any of the preceding claims, wherein said outer layer is selected from the group of ethylene-α-olefin copolymers, low density polyethylene, high density polyethylene, polypropylene-ethylene copolymers, polypropylene homopolymers and copolymers, and polyester homopolymers and copolymers having a silicone exterior coating.

19. The process according to any of the preceding claims, wherein said outer layer comprises a biaxially oriented polypropylene homopolymer or copolymer film.

20. The process according to any of the preceding claims, wherein said outer layer comprises a cast polypropylene homopolymer or copolymer film.

21. The process according to any of the preceding claims, wherein the hydrogen peroxide resistant exterior of the outer polymeric surface is a silicone exterior coating, said silicone exterior coating being preferably cross-linked.

22. The process according to any of the preceding claims, wherein said outer layer includes a layer of ink printed on at least one surface thereof.

23. The process according to any of the preceding claims, wherein said film laminate further includes at least one first intermediate layer between said inner sealant layer and said oxygen barrier layer.

24. The process according to any of the preceding claims, wherein said film laminate further includes at least one second intermediate layer between said outer layer and said oxygen barrier layer.

25. The process according to any of the preceding claims, wherein said inner sealant layer comprises an exterior surface layer of a multilayer coextruded film.

26. The process according to claim 25, wherein said multilayer coextruded film includes five layers including an interior surface layer comprising low density polyethylene, a first tie layer, an ethylene-vinyl alcohol copolymer layer, a second tie layer and an exterior surface layer, wherein said first polymeric adhesive tie layer bonds said interior surface layer to a first surface of said ethylene-vinyl alcohol copolymer layer and said second polymeric adhesive tie layer bonds a second surface of said ethylene-vinyl alcohol copolymer layer to the exterior surface layer of said multilayer coextruded film.

27. The process according to any of the preceding claims, wherein said oxygen barrier layer has an oxygen transmission rate (oxygen permeability) of less than 15.5 cm³ O₂/m²/24 h at 1 atmosphere, 0 % relative humidity and 23 °C, as measured according to ASTM D-3985-81, and/or wherein said multilayer film laminate has an oxygen transmission rate (oxygen permeability) of less than 20 cm³ O₂/m²/24 h at 1 atmosphere, 0 % relative humidity and 23 °C, preferably less than 15 cm³ O₂/m²/24 h, more preferably less than 10 cm³ O₂/m²/24 h, as measured according to ASTM D-3985-81.

28. The process according to any of the preceding claims, the film laminate having an Elmendorf tear strength of 300 grams force or less in at least the transverse direction.

29. A product comprising an aseptical package obtainable according to a process as defined in any of claims 1 to 28.

30. A multilayer film laminate adapted for aseptic packaging applications, especially for food items and medicinal products that require aseptic conditions for proper shelf life, said film laminate comprising:
(a) an inner polymeric surface sealant layer comprising an olefin polymer having a Vicat Softening Point greater than 90 °C;
(b) an intermediate oxygen barrier layer; and
(c) an outer polymeric surface layer selected from olefin polymers having a Vicat Softening Point greater than 90 °C and polyester homopolymers or copolymers having a hydrogen peroxide resistant exterior coating;
wherein said multilayer film laminate is irradiated at a dosage in an amount sufficient to kill microorganisms entrapped between layers of said multilayer film laminate
and is treated by a sterilization treatment via exposing both surfaces of said multilayer film laminate to a hydrogen peroxide sterilization solution with subsequent removal of said hydrogen peroxide sterilization solution.

31. The multilayer film laminate of claim 30, said multilayer film laminate being obtainable according to a process as defined in any of claims 1 to 28.

32. An aseptic package adapted for aseptically packaging food items and medicinal products that require aseptic conditions for proper shelf life, said aseptic package being formed from a multilayer film laminate as defined in claim 30 or 31.

33. The aseptic package of claim 32 being fold into a cylinder and sealed longitudinally.

34. The aseptic package of claims 32 or 33, said aseptic package being obtainable according to a process as defined in any of claims 1 to 28.

## Patentansprüche

1. Verfahren zum aseptischen Verpacken eines Produkts, umfassend:
(A) Bereitstellen eines bestrahlten mehrschichtigen Folienlaminats, welches geeignet ist für aseptische Verpackungsanwendungen, wobei das Folienlaminat umfaßt:
(i) eine innere polymere Oberflächensiegelungsschicht, umfassend ein olefinisches Polymer mit einer Vicat-Erweichungstemperatur über 90 °C;
(ii) eine zwischenliegende Sauerstoffsperrschicht; und
(iii) eine äußere polymere Oberflächenschicht, umfassend eine polymere Schicht, ausgewählt aus olefinischen Polymeren und Polyesterhomopolymeren oder -copolymeren mit einer wasserstoffperoxidbeständigen äußeren Beschichtung, wobei die äußere Schicht einer Vicat-Erweichungstemperatur über 90 °C aufweist;
wobei das mehrschichtige Folienlaminat mit einer (Strahlen-)Dosis bestrahlt wird, welche ausreicht, um zwischen den Schichten des mehrschichtigen Folienlaminats eingeschlossene Mikroorganismen abzutöten;
(B) Aussetzen beider Oberflächen des Verpackungsfolienlaminats einer Wasserstoffperoxidsterilisationslösung;
(C) Entfernen im wesentlichen der gesamten Wasserstoffperoxidsterilisationslösung von den Oberflächen des Verpackungsfolienlaminats;
(D)Ausbilden eines im wesentlichen vertikalen, längs gesiegelten Schlauches;
(E) Befüllten des Schlauches mit dem zu verpackenden Material;
(F) Siegeln des Schlauchs in Querrichtung, um das zu verpackende Material in einzelnen Verpackungen einzuschließen; und
(G) Durchtrennen des Verpackungsfolienlaminats in den gesiegelten Bereiche zwischen den einzelnen Verpackungen.

2. Verfahren nach Anspruch 1, wobei die Bestrahlung des mehrschichtigen Folienlaminats vor Schritt (B) durchgeführt wird.

3. Verfahren nach Anspruch 1 oder 2, wobei das mehrschichtige Folienlaminat mit einer (Strahlen-)Dosis zwischen 1 und 20 Megarad bestrahlt wird.

4. Verfahren nach einem der vorhergehenden Ansprüche, wobei das mehrschichtige Folienlaminat mit einer (Strahlen-)Dosis von mindestens 2 Megarad, insbesondere mit einer (Strahlen-)Dosis von mindestens 4 Megarad, vorzugsweise mit einer (Strahlen-)Dosis von mindestens 5 Megarad, bestrahlt wird.

5. Verfahren nach einem der vorhergehenden Ansprüche, wobei die Bestrahlung mit einer Strahlenart (Bestrahlungsmedium), ausgewählt aus der Gruppe bestehend aus hochenergetischen Elektronenstrahlen; Röntgenstrahlen; Gammastrahlen, z. B. durch Verwendung von Eisen 59 und/oder Kobalt 60; Betastrahlen, z. B. durch Verwendung von Kobalt 60, Kohlenstoff 14, Phosphor 32 und/oder Strontium 90; und ultravioletter Strahlung, insbesondere ultravioletter Strahlung über 2.000 und unter 2.700 Angström, durchgeführt wird.

6. Verfahren nach einem der vorangehenden Ansprüche, wobei das mehrschichtige Folienlaminat eine Gesamtdicke von weniger als 254 µm (10 mil), insbesondere eine Gesamtdicke von weniger als 102 µm (4,0 mil), aufweist.

7. Verfahren nach einem der vorangehenden Ansprüche, wobei die innere Siegelungsschicht ausgewählt ist aus der Gruppe von Ethylen-α-Olefin-Copolymeren, Polyethylen mit niedriger Dichte (Low Density Polyethylene), Polyethylen mit hoher Dichte (High Density Polyethylene), Polypropylen-Ethylen-Copolymeren und deren Mischungen.

8. Verfahren nach einem der vorangehenden Ansprüche, wobei die innere Siegelungsschicht ein Ethylen-α-Olefin-Copolymer umfaßt.

9. Verfahren nach einem der vorangehenden Ansprüche, wobei das Ethylen-α-Olefin-Copolymer ein Copolymer aus Ethylen und wenigstens einem C₃- bis C₁₀-α-Olefin umfaßt.

10. Verfahren nach einem der vorangehenden Ansprüche, wobei das mindestens eine C₃- bis C₁₀-α-Olefin ausgewählt ist aus 1-Hexen und 1-Octen.

11. Verfahren nach einem der vorangehenden Ansprüche, wobei die innere Siegelungsschicht einen Schmelzpunkt von über 120 °C aufweist.

12. Verfahren nach einem der vorangehenden Ansprüche, wobei die innere Siegelungsschicht eine Dichte von größer als 0,910 g/cm³, insbesondere eine Dichte von größer als 0,915 g/cm³, aufweist.

13. Verfahren nach einem der vorangehenden Ansprüche, wobei das olefinische Polymer ein Propylen-Ethylen-Copolymer mit einem Ethylenanteil von weniger als 10 Gew.-% umfaßt.

14. Verfahren nach einem der vorangehenden Ansprüche, wobei die Sauerstoffsperrschicht ausgewählt ist aus der Gruppe von Ethylen-Vinylalkohol-Copolymer, metallisierten Folien, Copolymeren des Vinylidenchlorids, Metallfolien und oxidbeschichteten Folien.

15. Verfahren nach einem der vorangehenden Ansprüche, wobei die Sauerstoffsperrschicht eine metallisierte Folie, ausgewählt aus metallisiertem biaxial orientiertem Polyesterterephthalat und metallisiertem biaxial orientierten Nylon, umfaßt.

16. Verfahren nach einem der vorangehenden Ansprüche, wobei die Sauerstoffsperrschicht eine metalloxidbeschichtete Folie umfaßt, wobei das Metalloxid ausgewählt ist aus Aluminiumoxid und Siliziumoxid.

17. Verfahren nach einem der vorangehenden Ansprüche, wobei die Sauerstoffsperrschicht eine Metallfolie umfaßt.

18. Verfahren nach einem der vorangehenden Ansprüche, wobei die äußere Schicht ausgewählt ist aus der Gruppe von Ethylen-α-Olefin-Copolymeren, Polyethylen mit geringer Dichte (Low Density Polyethylene), Polyethylen mit hoher Dichte (High Density Polyethylene), Polypropylen-EthylenCopolymeren, Polypropylenhomopolymeren und -copolymeren und Polyesterhomopolymeren und -copolymeren mit einer äußeren Silikonbeschichtung.

19. Verfahren nach einem der vorangehenden Ansprüche, wobei die äußere Schicht eine biaxial orientierte Polypropylenhomopolymer- oder -copolymerfolie umfaßt.

20. Verfahren nach einem der vorangehenden Ansprüche, wobei die äußere Schicht eine Polypropylenhomopolymer- oder -copolymerflachfolie umfaßt.

21. Verfahren nach einem der vorangehenden Ansprüche, wobei das wasserstoffperoxidbeständige Äußere der äußeren polymeren Oberfläche eine Silikonaußenbeschichtung ist, wobei die Silikonaußenbeschichtung bevorzugt quervernetzt ist.

22. Verfahren nach einem der vorangehenden Ansprüche, wobei die äußere Schicht eine Tinteschicht aufweist, welche auf mindestens eine ihrer Oberflächen gedruckt ist.

23. Verfahren nach einem der vorangehenden Ansprüche, wobei das Folienlaminat weiterhin mindestens eine Zwischenschicht zwischen der inneren Siegelungsschicht und der Sauerstoffsperrschicht aufweist.

24. Verfahren nach einem der vorangehenden Ansprüche, wobei das Folienlaminat weiterhin mindestens eine zweite Zwischenschicht zwischen der äußeren Schicht und der Sauerstoffsperrschicht aufweist.

25. Verfahren nach einem der vorangehenden Ansprüche, wobei die innere Siegelungsschicht eine äußere Oberflächenschicht einer mehrschichtigen coextrudierten Folie umfaßt.

26. Verfahren nach Anspruch 25, wobei die mehrschichtige coextrudierte Folie fünf Schichten aufweist, welche eine innere Oberflächenschicht, aufweisend Polyethylen mit geringer Dichte (Low Density Polyethylene), eine erste Verbindungsschicht, eine Ethylen-Vinylalkohol-Copolymerschicht, eine zweite Verbindungsschicht und eine äußere Oberflächenschicht aufweist, wobei die erste polymere klebende Verbindungsschicht die innere Oberflächenschicht mit einer ersten Oberfläche der Ethylen-Vinylalkohol-Copolymerschicht verbindet und die zweite polymere klebende Verbindungsschicht eine zweite Oberfläche der Ethylen-Vinylalkohol-Copolymerschicht mit der äußeren Oberflächenschicht der mehrschichtigen coextrudierten Folie verbindet.

27. Verfahren nach einem der vorangehenden Ansprüche, wobei die Sauerstoffsperrschicht eine Sauerstoffdurchlässigkeit von weniger als 15,5 cm³ O₂/m²/24 h bei 1 Atmosphäre, 0 % relativer Luftfeuchtigkeit und 23 °C, gemessen nach ASTM D-3985-81, aufweist und/oder wobei das mehrschichtige Folienlaminat eine Sauerstoffdurchlässigkeit von weniger als 20 cm³ O₂/m²/24 h bei 1 Atmosphäre, 0 % relativer Luftfeuchtigkeit und 23 °C, bevorzugt weniger als 15 cm³ O₂/m²/24 h, noch mehr bevorzugt weniger als 10 cm³ O₂/m²/24 h, gemessen nach ASTM D-3985-81, aufweist.

28. Verfahren nach einem der vorangehenden Ansprüche, wobei das Folienlaminat eine Reißfestigkeit nach Elmendorf von 300 grams-force oder weniger zumindest in Querrichtung aufweist.

29. Produkt, aufweisend eine aseptische Verpackung, erhältlich durch ein Verfahren nach einem der Ansprüche 1 bis 28.

30. Mehrschichtiges Folienlaminat, geeignet für aseptische Verpackungsanwendungen, insbesondere für Nahrungsmittelprodukte und Medizinprodukte, welche aseptische Bedingungen für eine geeignete Aufbewahrung benötigen, wobei das Folienlaminat aufweist:
(a) eine innere polymere Oberflächensiegelungsschicht, aufweisend ein olefinisches Polymer mit einer Vicat-Erweichungstemperatur von über 90 °C;
(b) eine zwischenliegende Sauerstoffsperrschicht; und
(c) eine äußere polymere Oberflächenschicht, ausgewählt aus olefinischen Polymeren mit einer Vicat-Erweichungstemperatur von über 90 °C und Polyesterhomopolymeren oder -copolymeren mit einer wasserstoffperoxidbeständigen äußeren Beschichtung;
wobei das mehrschichtige Folienlaminat mit einer (Strahlen-)Dosis bestrahlt ist, welche ausreicht, um zwischen den Schichten des mehrschichtigen Folienlaminats eingeschlossene Mikroorganismen abzutöten,
und einer Sterilisationsbehandlung unterzogen ist, indem beide Oberflächen des mehrschichtigen Folienlaminats einer Wasserstoffperoxidsterilisationslösung ausgesetzt worden sind und anschließend die Wasserstoffperoxidsterilisationslösung entfernt worden ist.

31. Mehrschichtiges Folienlaminat nach Anspruch 30, wobei das mehrschichtige Folienlaminat durch das Verfahren nach einem der Ansprüche 1 bis 28 erhältlich ist.

32. Aseptische Verpackung, geeignet zur aseptischen Verpackung von Nahrungsmittelprodukten und Medizinprodukten, welche aseptische Bedingungen zur geeigneten Aufbewahrung benötigen, wobei die aseptische Verpackung aus einem mehrschichtigen Folienlaminat nach einem der Ansprüche 30 oder 31 hergestellt ist.

33. Aseptische Verpackung nach Anspruch 32, wobei die aseptische Verpa kung zu einem Zylinder geformt und längsgesiegelt ist.

34. Aseptische Verpackung nach einem der Ansprüche 32 oder 33, wobei die aseptische Verpackung durch das Verfahren nach einem der Ansprüche 1 bis 28 erhältlich ist.

## Revendications

1. Procédé d'emballage aseptique d'un produit, comprenant:
(A) la fourniture d'un film stratifié multicouche irradié adapté pour les applications d'emballage aseptique, ledit film stratifié comprenant:
(i) une couche d'étanchéification de surface polymère interne comprenant un polymère oléfinique ayant une température de ramollissement Vicat supérieure à 90 °C;
(ii) une couche formant barrière contre l'oxygène intermédiaire; et
(iii) une couche de surface polymère externe comprenant une couche polymère choisie parmi les polymères oléfiniques et les homopolymères ou copolymères de polyester ayant un revêtement extérieur résistant au peroxyde d'hydrogène, ladite couche externe ayant une température de ramollissement Vicat supérieure à 90 °C;
dans lequel ledit film stratifié multicouche est irradié à un dosage dans une quantité suffisante pour tuer les microorganismes piégés entre les couches dudit film stratifié multicouche;
(B) l'exposition des deux surfaces dudit film d'emballage stratifié à une solution de stérilisation au peroxyde d'hydrogène;
(C) l'élimination de la quasi-totalité de la solution de stérilisation au peroxyde d'hydrogène des surfaces dudit film d'emballage stratifié;
(D) la formation d'un tube sensiblement vertical étanche au niveau longitudinal;
(E) le remplissage dudit tube avec un matériau à emballer;
(F) l'étanchéification transversale dudit tube pour englober le matériau à emballer dans des emballages individuels; et
(G) le découpage du film d'emballage stratifié sur les régions étanches entre les emballages individuels.

2. Procédé selon la revendication 1, dans lequel l'irradiation dudit film stratifié multicouche est effectuée avant l'étape (B).

3. Procédé selon la revendication 1 ou 2, dans lequel ledit film stratifié multicouche est irradié à un dosage compris entre 1 et 20 Mégarads.

4. Procédé selon l'une quelconque des revendications précédentes, dans lequel ledit film stratifié multicouche est irradié à un dosage dans une quantité d'au moins 2 Mégarads, en particulier à un dosage dans une quantité d'au moins 4 Mégarads, de préférence à un dosage dans une quantité d'au moins 5 Mégarads.

5. Procédé selon l'une quelconque des revendications précédentes, dans lequel ladite irradiation est effectuée par un milieu de radiation choisi dans le groupe constitué par les faisceaux d'électrons à haute énergie; les rayons X; les rayons gamma, par exemple en utilisant du fer 59 et/ou du cobalt 60; les rayons B, par exemple en utilisant du cobalt 60, du carbone 14, du phosphore 32 et/ou du strontium 90; et la lumière ultraviolette, en particulier la lumière ultraviolette supérieure à 2 000 et inférieure à 2 700 Angströms.

6. Procédé selon l'une quelconque des revendications précédentes, dans lequel ledit film stratifié multicouche a une épaisseur totale inférieure à 254 µm (10 mil), en particulier une épaisseur totale inférieure à 102 µm (4,0 mil).

7. Procédé selon l'une quelconque des revendications précédentes, dans lequel ladite couche d'étanchéification interne est choisie dans le groupe constitué par les copolymères d'éthylène/α-oléfine, le polyéthylène basse densité, le polyéthylène haute densité, les copolymères de polypropylène/éthylène et les mélanges de ceux-ci.

8. Procédé selon l'une quelconque des revendications précédentes, dans lequel ladite couche d'étanchéification interne comprend un copolymère d'éthylène/α-oléfine.

9. Procédé selon l'une quelconque des revendications précédentes, dans lequel copolymère d'éthylène/α-oléfine comprend un copolymère d'éthylène et au moins une α-oléfine en C₃ à C₁₀.

10. Procédé selon l'une quelconque des revendications précédentes, dans lequel au moins une α-oléfine en C₃ à C₁₀ est choisie parmi l'hexène-1 et l'octène-1.

11. Procédé selon l'une quelconque des revendications précédentes, dans lequel ladite couche d'étanchéification interne a une température de ramollissement supérieure à 120 °C.

12. Procédé selon l'une quelconque des revendications précédentes, dans lequel ladite couche d'étanchéification interne a une densité supérieure à 0,910 g/cm³, en particulier une densité supérieure à 0,915 g/cm³.

13. Procédé selon l'une quelconque des revendications précédentes, dans lequel ledit polymère oléfinique comprend un copolymère de propylène/éthylène ayant une teneur en éthylène inférieure à 10 % en poids.

14. Procédé selon l'une quelconque des revendications précédentes, dans lequel ladite couche formant barrière contre l'oxygène est choisie dans le groupe constitué par le copolymère d'éthylène/alcool vinylique, les films métallisés, les copolymères de chlorure de vinylidène, la feuille de métal et les films recouverts d'oxyde.

15. Procédé selon l'une quelconque des revendications précédentes, dans lequel ladite couche formant barrière contre l'oxygène comprend un film métallisé choisi parmi le polyester téréphtalate métallisé bi-orienté et le nylon métallisé bi-orienté.

16. Procédé selon l'une quelconque des revendications précédentes, dans lequel ladite couche formant barrière contre l'oxygène comprend un film recouvert d'oxyde métallique dans lequel l'oxyde métallique est choisi parmi l'oxyde d'aluminium et l'oxyde de silicium.

17. Procédé selon l'une quelconque des revendications précédentes, dans lequel ladite couche formant barrière contre l'oxygène comprend une feuille de métal.

18. Procédé selon l'une quelconque des revendications précédentes, dans lequel ladite couche externe est choisie dans le groupe constitué par les copolymères d'éthylène/α-oléfine, le polyéthylène basse densité, le polyéthylène haute densité, les copolymères de polypropylène/éthylène, les homopolymères et copolymères de polypropylène et les homopolymères et copolymères de polyester ayant un revêtement extérieur en silicone.

19. Procédé selon l'une quelconque des revendications précédentes, dans lequel ladite couche externe comprend un film d'homopolymère ou de copolymère de polypropylène bi-orienté.

20. Procédé selon l'une quelconque des revendications précédentes, dans lequel ladite couche externe comprend un film d'homopolymère ou de copolymère de polypropylène coulé.

21. Procédé selon l'une quelconque des revendications précédentes, dans lequel ledit revêtement extérieur résistant au peroxyde d'hydrogène de la surface polymère externe est un revêtement extérieur en silicone, ledit revêtement extérieur en silicone étant de préférence réticulé.

22. Procédé selon l'une quelconque des revendications précédentes, dans lequel ladite couche externe comprend une couche d'encre imprimée sur au moins une de ses surfaces.

23. Procédé selon l'une quelconque des revendications précédentes, dans lequel ledit film stratifié comprend en outre au moins une première couche intermédiaire entre ladite couche d'étanchéification interne et ladite couche formant barrière contre l'oxygène.

24. Procédé selon l'une quelconque des revendications précédentes, dans lequel ledit film stratifié comprend en outre au moins une deuxième couche intermédiaire entre ladite couche externe et ladite couche formant barrière contre l'oxygène.

25. Procédé selon l'une quelconque des revendications précédentes, dans lequel ladite couche d'étanchéification interne comprend une couche de surface extérieure d'un film multicouche coextrudé.

26. Procédé selon la revendication 25, dans lequel ledit film multicouche coextrudé comprend cinq couches incluant une couche de surface intérieure comprenant du polyéthylène basse densité, une première couche de liaison, une couche de copolymère d'éthylène/alcool vinylique, une deuxième couche de liaison et une couche de surface extérieure, dans lequel ladite première couche de liaison adhésive polymère lie ladite couche de surface intérieure à une première surface dudit copolymère d'éthylène/alcool vinylique et ladite deuxième couche de liaison adhésive polymère lie une deuxième surface dudit copolymère d'éthylène/alcool vinylique à la couche de surface extérieure dudit film multicouche coextrudé.

27. Procédé selon l'une quelconque des revendications précédentes, dans lequel ladite couche formant barrière contre l'oxygène a une vitesse de transmission de l'oxygène (perméabilité à l'oxygène) de moins de 15,5 cm³ O₂/m²/24 h à 1 atmosphère, 0 % d'humidité relative et 23 °C, telle que mesurée selon la norme ASTM D-3985-81, et/ou dans lequel ledit film stratifié multicouche a une vitesse de transmission de l'oxygène (perméabilité à l'oxygène) de moins de 20 cm³ O₂/m²/24 h à 1 atmosphère, 0 % d'humidité relative et 23 °C, de préférence de moins de 15 cm³ O₂/m²/24 h, plus préférablement de moins de 10 cm³ O₂/m²/24 h, telle que mesurée selon la norme ASTM D-3985-81.

28. Procédé selon l'une quelconque des revendications précédentes, ledit film stratifié ayant une résistance à la déchirure Elmendorf de 300 grammes force ou moins dans au moins la direction transversale.

29. Produit comprend un emballage aseptique pouvant être obtenu selon un procédé tel que défini dans l'une quelconque des revendications 1 à 28.

30. Film stratifié multicouche adapté aux applications d'emballage aseptique, en particulier aux produits alimentaires et médicaux nécessitant des conditions aseptiques pour une durée de conservation appropriée, ledit film stratifié comprenant:
(a) une couche d'étanchéification de surface polymère interne comprenant un polymère oléfinique ayant une température de ramollissement Vicat supérieure à 90 °C;
(b) une couche formant barrière contre l'oxygène intermédiaire; et
(c) une couche de surface polymère externe choisie parmi les polymères oléfiniques ayant une température de ramollissement Vicat supérieure à 90 °C et les homopolymères ou copolymères de polyester ayant un revêtement extérieur résistant au peroxyde d'hydrogène;
ledit film stratifié multicouche étant irradié à un dosage dans une quantité suffisante pour tuer les microorganismes piégés entre les couches dudit film stratifié multicouche,
et étant traité par traitement de stérilisation en exposant les deux surfaces dudit film stratifié multicouche à une solution de stérilisation au peroxyde d'hyrogène puis en éliminant ladite solution de stérilisation au peroxyde d'hyrogène.

31. Film stratifié multicouche selon la revendication 30, ledit film stratifié multicouche pouvant être obtenu selon un procédé tel que défini dans l'une quelconque des revendications 1 à 28.

32. Emballage aseptique adapté à l'emballage aseptique des produits alimentaires et médicaux nécessitant des conditions aseptiques pour une durée de conservation appropriée, ledit emballage aseptique étant constitué d'un film stratifié multicouche tel que défini dans la revendication 30 ou 31.

33. Emballage aseptique selon la revendication 32, étant plié dans un cylindre et étanchéifié au niveau longitudinal.

34. Emballage aseptique selon les revendications 32 ou 33, ledit emballage aseptique pouvant être obtenu selon un procédé tel que défini dans l'une quelconque des revendications 1 à 28.
